# EUROPÄISCHE PATENTSCHRIFT

(11) **EP 1 391 678 B1**
(45) Veröffentlichungstag und Bekanntmachung des Hinweises auf die Patenterteilung: **30.11.2005**
(21) Anmeldenummer: 02018558.3
(22) Anmeldetag: 17.08.2002
(51) Int. Cl.: F28F 19/04, C09D 5/10

(54) **Heizkörper**
Radiator
Radiateur

(43) Veröffentlichungstag der Anmeldung: 25.02.2004
(73) Patentinhaber: Zehnder Verkaufs- und Verwaltungs AG, 5722 Gränichen (CH)
(72) Erfinder: Zhangeng, Guo, 100026 Beijing (CN); Hotz, René, Ing. HTL, 4600 Olten (CH)
(74) Vertreter: Stenger, Watzke & Ring

(56) Entgegenhaltungen:
- DE-A- 2 749 397
- US-A- 3 184 165
- US-A- 3 464 906
- US-A- 6 050 330

## Beschreibung

Die vorliegende Erfindung betrifft einen Heizkörper mit von einem Heizmedium durchströmten Heizkörperelementen aus metallischem Werkstoff, wobei die Heizkörperelemente zumindest auf Ihrer Innenseite mit einer korrosionsbeständigen Beschichtung versehen sind.

Heizkörper der vorbenannten Art sind aus dem Stand der Technik in vielerlei Ausgestaltungsform bekannt. All diesen Heizkörperformen ist gemein, daß ein Heizmedium, in der Regel Wasser, erhitzt und durch die Heizkörperelemente des Heizkörpers geführt wird. Die Heizkörperelemente können hierbei röhrenförmig, plattenförmig oder dergleichen ausgebildet sein. Darüber hinaus ist es bekannt, spezielle Heizkörperformen vorzusehen, die an die baulichen Gegebenheiten des Installationsortes angepaßt sind. Aber auch derartige Heizkörper verfügen über Heizkörperelemente die im Zuge eines Heizvorganges von einem Heizmedium durchströmt werden.

Bei Heizkörpern, deren Heizkörperelemente von einem Heizmedium durchströmt werden, ergibt sich das grundlegende Problem der Korrosion. Entscheidenden Einfluß auf den Korrosionsbeginn bzw. den Korrosionsfortschritt hat hierbei die Qualität, d.h. die Aggressivität des Heizmediums gegenüber den Heizkörperelementen. Da Heizkörper der vorbeschriebenen Art in der Regel mit Wasser als Heizmedium betrieben werden, kommt es hinsichtlich der Korrosionsbeständigkeit der Heizkörperelemente unter anderem auch auf die Reinheit des Wassers bzw. auf die dem Wasser zugesetzten Komponenten an. Und so hat sich in der Praxis gezeigt, daß die Korrosionsbeständigkeit von Heizkörperelementen, die von verunreinigtem, schmutzigem Wasser als Heizmedium durchströmt werden, drastisch verringert ist. Dabei tritt dieses Problem insbesondere in solchen Ländern auf, die eine nur unzureichende Sicherung der Wasserqualität gewährleisten und auch mit korrosionsfördernden Bestandteilen versehenes Wasser dem Benutzungskreislauf zurückführen. Die Verwendung eines solch belasteten Wassers als Heizmedium für Heizkörper führt sodann in nachteiliger Weise dazu, daß die Lebensdauer der Heizkörper stark verringert ist und bereits nach wenigen Jahren Ausfallerscheinungen aufgrund von Korrosionsschäden auftreten können.

Zur Verbesserung der Korrosionsbeständigkeit der Heizkörperelemente und der daraus resultierenden verlängerten Lebensdauer der Heizkörper ist es aus dem Stand der Technik bekannt, Opferanoden innerhalb der Heizkörperelemente anzuordnen. Mit dieser Maßnahme wird dafür Sorge getragen, daß das korrosive Heizmedium nicht die Heizkörperelemente selbst sondern die dafür vorgesehenen Opferanoden angreift. In der Konsequenz werden so die Heizkörperelemente zumindest bis zu einem Auflösen der Opferanoden weitestgehend vor einem korrosiven Angriff durch das Heizmedium geschützt. Von Nachteil bei der Verwendung von Opferanoden ist jedoch der Umstand, daß diese nicht für sämtliche Heizkörpergeometrien geeignet sind. Insbesondere solche Heizkörpergeometrien, die Heizkörperelemente mit nur geringem Durchströmungsquerschnitt aufweisen, können nicht mit Opferanoden versehen werden, da hierdurch der Durchströmungsquerschnitt derart stark verringert würde, daß ein Durchströmen mit Heizmedium zur Erzielung eines gewünschten Heizeffektes nicht mehr möglich wäre. Hinzu kommt ferner, daß in Abhängigkeit der Aggressivität des Heizmediums auch die installierten Opferanoden nach Ablauf einer gewissen Zeit vollständig korrodiert wären, so daß spätestens dann die nicht mehr aufzuhaltende Korrosion der Heizkörperelemente beginnen würde. Die Installation von Opferanoden stellt somit in der Konsequenz nicht einen wirksamen Korrosionsschutz für die Heizkörperelemente dar, sondern verschiebt lediglich den korrosiven Angriff auf die Heizkörperelemente zeitlich heraus.

Auch ist es aus dem Stand der Technik bekannt, die Innenseite einer fluiddurchströmten Vorrichtung zwecks Korrosionsschutz mit einer Beschichtung aus Polymer zu versehen, so z. B. aus der U.S. 6,050,330. Beschrieben ist hier eine Vorrichtung, die aus zwei aufeinanderliegenden Metallplatten gebildet ist, wobei die Strömungskanäle für das Fluid durch in die Metallplatten eingebrachte Vertiefungen gebildet sind. Die einander gegenüberliegenden Seiten der Metallplatten sind mit einem Überzug aus einem Polymer versehen, wobei der Polymerüberzug zweierlei Funktionen übernimmt. Zum einen dient er als Korrosionsschutz für die Metallplatten, zum anderen sorgt er für eine feste Verbindung der aufeinander angeordneten Metallplatten. Ein dauerhafter Korrosionsschutz kann durch den Polymerüberzug nicht bewirkt werden, insbesondere dann nicht, wenn es infolge einer weiteren Verwendung der fluiddurchströmten Vorrichtung zu einer Beschädigung der Polymerschicht kommt.

Es ist daher **Aufgabe** der Erfindung, einen Heizkörper bereitzustellen, dessen Innenseite mit einer korrosionsbeständigen Beschichtung versehen ist, die den metallischen Werkstoff des Heizkörpers auch bei der Verwendung eines aggressiven Heizmediums dauerhaft vor Korrosion schützt, und zwar auch dann, wenn es infolge der weiteren Verwendung des Heizkörpers zu einer Beschädigung der korrosionsbeständigen Schicht kommt.

Zur **Lösung** dieser Aufgabe wird mit der Erfindung vorgeschlagen, daß die Beschichtung aus einer wässrigen Dispersion gebildet ist, die Metalloxide sowie metallische Zink- und Aluminiumlamellen enthält.

Die besondere Erkenntnis, die der Erfindung zugrundeliegt, ist, daß eine Innenbeschichtung der Heizkörperelemente nicht nur möglich, sondern auch dauerhaft wirksam ist. Überwunden werden mußte hierbei der Vorbehalt, daß eine dauerhafte korrosionsbeständige Innenbeschichtung des Heizkörpers aufgrund der im Betrieb eines Heizkörpers auftretenden großen Temperaturunterschiede nicht möglich ist. Es wurde davon ausgegangen, daß Versiegelungen der Heizkörperelementoberflächen infolge der Einwirkung stark unterschiedlicher Temperaturen zur Rißbildung neigen würden und so eine dauerhafte Korrosionsbeständigkeit nicht gewährleistet werden könnte. Dieses Vorurteil konnte nun durch eine Vielzahl von Versuchen widerlegt werden.

Erfindungsgemäß sind die Heizkörperelemente des Heizkörpers zumindest auf ihrer Innenseite mit einer korrosionsbeständigen Beschichtung versehen. Den Durchströmungsquerschnitt der Heizkörperelemente verringernde Opferanoden können nunmehr in vorteilhafter Weise entfallen. Von Vorteil ist des weiteren, daß die innenseitige Beschichtung der Heizkörperelemente einen dauerhaften Korrosionsschutz darstellt, so daß die Lebensdauer der Heizkörper insgesamt verlängert wird. Die erfindungsgemäße Innenbeschichtung ist dabei nicht nur korrosionsbeständig gegenüber gereinigtem, sauberem Wasser als Heizmedium, sondern vielmehr auch gegenüber verschmutztem und korrosivbestandteile beinhaltendem Wasser. Der Einsatz des erfindungsgemäßen Heizkörpers ist unter Beibehaltung der langen Lebensdauer daher auch in solchen Ländern möglich, die mit dem öffentlichen Wasserkreislauf nur eine schlechte Wasserqualität zur Verfügung stellen können.

Erfindungsgemäß ist vorgesehen, daß die Innenbeschichtung des Heizkörperelements mittels eines Naßlacks gebildet ist, wobei vorzugsweise eine wäßrige Dispersion zum Einsatz kommt, die Metalloxide sowie metallische Zink- und Aluminiumlamellen enthält. Die Verwendung einer derartigen Beschichtung weist eine Reihe von Vorteilen auf. So stellen die vielen überlappenden Zink- und Aluminiumlamellen einen Barriereschutz dar, der die beschichtete Innenoberfläche der Heizkörperelemente extrem korrosionsbeständig macht. Die Zinklamellen haben darüber hinaus eine galvanische Schutzfunktion, denn korrodiert der Zink vorrangig vor dem metallischen Werkstoff des Heizkörperelements. Die im Beschichtungsüberzug eingelagerten Metalloxide bewirken zudem eine Passivierung, so daß die Korrosionsreaktion des Zinks als auch des metallischen Werkstoffs des Heizkörperelements verlangsamt wird. Ferner bewirkt die vorgeschlagene Beschichtung einen kathodischen Schutz, so daß unter Umständen verletzte Zonen der Beschichtung mit Zinkoxiden und Karbonaten aufgefüllt werden. Insgesamt ergibt sich somit eine hoch wirksame korrosionsbeständige Beschichtung, so daß auch korrosiv wirkende Heizmedien den Heizkörperelementen nichts anhaben können.

Aufgetragen werden kann die erfindungsgemäße Beschichtung beispielsweise durch Tauchen, Aufsprühen oder Lackieren. Auch ist ein Auftragverfahren mittels Elektrostatik denkbar.

Ein weiterer Vorteil der erfindungsgemäß vorgesehenen Beschichtung ergibt sich aus dem Umstand, daß durch die Nichtverwendung von Säuren und Elektrolysen im Beschichtungsprozeß die ausgebildete Beschichtung frei von Wasserstoffversprödung ist, was im Unterschied hierzu sehr häufig hinsichtlich elektrolytischer und galvanischer Verfahren der Fall ist.

Erfindungsgemäß wird die Beschichtung in einer Schichtdicke von vorzugsweise 0,1 mm bis 0,5 mm aufgetragen. Auch sind dünnere Schichtdicken möglich, doch haben sich für einen wirksamen Korrosionsschutz insbesondere die vorgenannten Schichtdicken bewährt.

Gemäß einem weiteren Merkmal der Erfindung ist vorgesehen, die Heizkörperelemente auch auf ihrer Außenseite mit einer korrosionsbeständigen Beschichtung auszubilden. Vorteilhaft bei dieser Ausgestaltung ist insbesondere der vereinfachte Herstellungsprozeß. In einem einfachen Beschichtungsverfahrensschritt kann der Heizkörper sowohl auf seiner Innen- als auch auf seiner Außenseite mit einer korrosionsbeständigen Beschichtung versehen werden. Da die vorzugsweise als Naßlack ausgebildete Beschichtung einen guten Haftgrund für Lacke und Farben darstellt, wirkt sich die korrosionsbeständige Außenbeschichtung des Heizkörpers für nachfolgende Verarbeitungsschritte nicht nachteilig aus.

Insgesamt wird mit der Erfindung vorgeschlagen, entgegen der bisher in der Fachwelt vorherrschenden Meinung die Heizkörperelemente eines Heizkörpers mit einer Innenbeschichtung zu versehen und so eine dauerhafte Korrosionsbeständigkeit auch gegenüber Korrosion auslösenden Heizmedien bereitzustellen. Der aufwendige Einbau von Opferanoden kann somit verhindert werden. Auch wird die Ausbildung einer Innenbeschichtung der Heizkörperelemente nicht durch die geometrische Ausgestaltung des Heizkörpers gehindert, so daß in vorteilhafter Weise auch nicht herkömmliche Geometrien bzw. Sondergeometrien von Heizkörperelementen wirkungsvoll mit einer korrosionsbeständigen Innenbeschichtung versehen werden können. Die erfindungsgemäß vorgeschlagene Beschichtungsschicht ist zudem ein guter Haftgrund für Lacke und Farben, so daß in einem vereinfachten Beschichtungsprozeß die gesamten Heizkörperelemente bzw. der gesamte Heizkörper mit einer Beschichtung sowohl auf der Innen- als auch auf der Außenseite versehen werden kann, ohne daß hiermit Nachteile einhergehen würden für die weiteren Herstellungs- bzw. Verarbeitungsprozesse.

## Patentansprüche

1. Heizkörper mit von einem Heizmedium durchströmten Heizkörperelementen aus metallischem Werkstoff, wobei die Heizkörperelemente zumindest auf ihrer Innenseite mit einer korrosionsbeständigen Beschichtung versehen sind,
**dadurch gekennzeichnet, daß**
die Beschichtung aus einer wässrigen Dispersion gebildet ist, die Metalloxide sowie metallische Zink- und Aluminiumlamellen enthält.

2. Heizkörper nach Anspruch 1, **dadurch gekennzeichnet, daß** die Beschichtung mittels eines Naßlacks gebildet ist.

3. Heizkörper nach einem der vorhergehenden Ansprüche, **dadurch gekennzeichnet, daß** die Beschichtung einer Schichtdicke von 0,1 mm bis 0,5 mm aufweist.

4. Heizkörper nach einem der vorhergehenden Ansprüche, **dadurch gekennzeichnet, daß** die Heizkörperelemente auch auf ihrer Außenseite mit einer korrosionsbeständigen Beschichtung versehen sind.

5. Heizkörper nach einem der vorhergehenden Ansprüche, **dadurch gekennzeichnet, daß** der metallische Werkstoff der Heizkörperelemente ein StahlWerkstoff ist.

## Claims

1. Heater with heater elements made from metal material through which a heating medium flows, wherein the heater elements are provided at least on the inside with a corrosion-resistant coating, **characterised in that** the coating is formed from an aqueous dispersion which contains metal oxides as well as metal zinc and aluminium lamellae.

2. Heater as claimed in Claim 1, **characterised in that** the coating is formed by means of a wet varnish.

3. Heater as claimed in any one of the preceding claims, **characterised in that** the coating has a layer thickness of 0.1 mm to 0.5 mm.

4. Heater as claimed in any one of the preceding claims, **characterised in that** the heater elements are also provided on the outside with a corrosion-resistant coating.

5. Heater as claimed in any one of the preceding claims, **characterised in that** the metal material of the heater elements is a steel material.

## Revendications

1. Radiateur avec des éléments de radiateur en matériau métallique parcourus par un fluide caloporteur, dans lequel les éléments de radiateur sont pourvus, au moins sur leur face intérieure, d'un revêtement résistant à la corrosion, **caractérisé en ce que** le revêtement est formé à partir d'une dispersion aqueuse contenant des oxydes métalliques ainsi que des lamelles métalliques de zinc et d'aluminium.

2. Radiateur selon la revendication 1, **caractérisé en ce que** le revêtement est formé au moyen d'une peinture liquide.

3. Radiateur selon l'une quelconque des revendications précédentes, **caractérisé en ce que** le revêtement présente une épaisseur de couche de 0,1 mm à 0,5 mm.

4. Radiateur selon l'une quelconque des revendications précédentes, **caractérisé en ce que** les éléments de radiateur sont également dotés d'un revêtement résistant à la corrosion sur leur face extérieure.

5. Radiateur selon l'une quelconque des revendications précédentes, **caractérisé en ce que** le matériau métallique des éléments de radiateur est un matériau à base d'acier.
